# EUROPEAN PATENT APPLICATION

(11) **EP 4 553 979 A2**
(43) Date of publication of application: **14.05.2025**
(21) Application number: 25166588.1
(22) Date of filing: 02.07.2021
(51) Int. Cl.: H01M 50/289

(54) **BATTERY MODULE HAVING POCKET CAPABLE OF CAPTURING FLARE AND SPARK EJECTED DURING SWELLING**

(30) Priority: 02.07.2020 KR 20200081659; 21.08.2020 KR 20200105297
(62) Divisional of application: 21831718.8
(71) Applicant: LG Energy Solution, Ltd., Seoul 07335 (KR)
(72) Inventor: HONG, Sung Goen, 34122 DAEJEON (KR); KIM, Seung Hyun, 34122 DAEJEON (KR); JO, Sang Hyun, 34122 DAEJEON (KR); SHIN, Jin Kyu, 34122 DAEJEON (KR); OK, Seung Min, 34122 DAEJEON (KR); KONG, Byung O, 34122 DAEJEON (KR)
(74) Representative: Plasseraud IP

(57) **Abstract**

The present invention relates to a battery module having a pocket capable of capturing flare and spark ejected at the time of swelling, and more particularly to a battery module including a cell stack (200) including a plurality of battery cells (210) stacked in a vertical direction and a protective case (100) configured to receive the cell stack (200), wherein the protective case (100) includes a lower cover (110) located under the cell stack, an upper cover (120) located above the cell stack, and a pair of side covers (130) located at sides of the cell stack (200), and each of the side covers (130) is provided at the inside thereof with a structure configured to interrupt movement of flare and spark ejected at the time of swelling.

## Description

### [Technical Field]

This application claims the benefit of priority to Korean Patent Application No. 2020-0081659 filed on July 2, 2020, the disclosure of which is incorporated herein by reference in its entirety.

This application claims the benefit of priority to Korean Patent Application No. 2020-0105297 filed on August 21, 2020, the disclosure of which is incorporated herein by reference in its entirety.

The present invention relates to a battery module having a pocket capable of capturing flare and spark ejected at the time of swelling, and more particularly to a battery module configured such that a pocket is provided between cell stacks or between the cell stack and a side cover in order to interrupt movement of flare and spark and to guide rapid discharge of air to the outside together with vent gas, whereby it is possible to prevent occurrence of fire outbreak conditions, and therefore it is possible to inhibit outbreak of fire.

### [Background Art]

Secondary batteries, which have high applicability to products and electrical properties, such as high energy density, have generally been used in electric vehicles (EV) or hybrid electric vehicles (HEV), each of which is driven using an electrical driving source, as well as portable devices. Such secondary batteries have attracted attention as a new energy source capable of increasing environmental friendliness and energy efficiency, since no by-products are generated as the result of use of energy in addition to a primary advantage in that it is possible to remarkably reduce the use of fossil fuels.

There are a lithium ion battery, a lithium polymer battery, a nickel-cadmium battery, a nickel-hydride battery, and a nickel-zinc battery as secondary batteries. A plurality of battery cells may be connected to each other in series or in parallel to constitute a battery module or a battery pack.

An energy storage system (ESS), which has attracted attention in recent years, is an apparatus that stores produced electricity in a battery in order to supply the electricity to consumers when needed, thereby maximizing electric power use efficiency.

In a general energy storage system (ESS), a plurality of battery modules constitutes a single rack, and several tens to hundreds of racks are combined to constitute a single system. In addition, the energy storage system is used in a state of being interlocked with an uninterruptible power supply (UPS) configured to stably supply electric power in response to abrupt power supply interruption or abnormality or a photovoltaic power system, which is a power generation apparatus configured to convert sunlight into electrical energy.

Meanwhile, although a secondary battery has excellent electrical properties, components constituting the battery, such as an active material or an electrolyte, are decomposed in an abnormal operation state, such as overcharging, overdischarging, exposure to high temperature, or electrical short circuit, whereby heat and gas are generated. As a result, a swelling phenomenon, i.e. expansion of the secondary battery, occurs. The swelling phenomenon accelerates decomposition, which causes explosion or ignition of the secondary battery due to thermal runaway.

That is, when thermal runaway occurs in a battery cell, flare, which is flame ejected from a weakly sealed portion like a flash, spark, which is a particle having heat discharged due to separation of an inner electrode and melting of an aluminum current collector, and high-temperature vent gas are generated. In particular, these substances do not stay at the positions at which they are generated but move to a neighboring module, including battery cells located therearound, whereby there is a high possibility of a major accident.

In connection therewith, Patent Document (Korean Patent Application Publication No. 2020-0011816) discloses a battery pack including a plurality of battery cells arranged such that main surfaces of the battery cells face each other; and a partition wall interposed between neighboring ones of the battery cells, wherein the partition wall is provided with an air pocket formed so as to be concave in a direction distant from the main surface of each of the battery cells in a thickness direction of the partition wall.

In the above prior art document, the partition wall and the air pocket are formed between neighboring battery cells, whereby it is possible to interrupt thermal interference between the neighboring battery cells, and therefore it is possible to somewhat interrupt thermal runaway from some locally degraded battery cells to other battery cells adjacent thereto.

However, the prior art document, which relates to a battery pack in which prismatic cells are stacked side by side, is not applicable to a battery module constituted by pouch-shaped cells, each of which includes a cell case and an electrode assembly and which is configured such that leads protrude outwards from the case, without change.

### (Prior Art Document)

(Patent Document 1) Korean Patent Application Publication No. 2020-0011816

### [Disclosure]

### [Technical Problem]

The present invention has been made in view of the above problems, and it is an object of the present invention to provide a battery module capable of interrupting movement of flare and spark generated when thermal runaway occurs in a battery cell, thereby preventing outbreak of fire or preventing spread of fire to a neighboring battery module.

It is another object of the present invention to provide a battery module capable of rapidly discharging air in a module case together with vent gas ejected when thermal runaway occurs in a battery cell, thereby preventing outbreak of fire.

It is a further object of the present invention to provide a battery module capable of discharging heat, vent gas, and internal air generated when thermal runaway occurs in a battery cell, to the outside, thereby preventing outbreak of fire.

### [Technical Solution]

In order to accomplish the above objects, a battery module according to the present invention includes a cell stack including a plurality of battery cells stacked in a vertical direction; and a protective case configured to receive the cell stack, wherein the protective case includes a lower cover located under the cell stack, an upper cover located above the cell stack, and a pair of side covers located at sides of the cell stack, and each of the side covers is provided at the inside thereof with a structure configured to interrupt movement of flare and spark ejected at the time of swelling.

Also, in the battery module according to the present invention, each side cover may include a vertical plate having a lower end located in close contact with the lower cover and an upper end located in close contact with the upper cover and a pair of bent plates formed at opposite side ends of the vertical plate so as to be bent and/or curved in a predetermined shape and face each other.

Also, in the battery module according to the present invention, the vertical plate of the side cover and the cell stack may be spaced apart from each other by a predetermined distance to form a third space portion.

Also, in the battery module according to the present invention, the cell stack may include the plurality of battery cells stacked in the vertical direction, a pressing layer located on at least one of an upper part and a lower part of the stacked battery cells, a busbar configured to allow positive electrode leads and negative electrode leads of the plurality of battery cells to be connected thereto, and a pair of busbar holders interposed between the positive electrode leads and the busbar and between the negative electrode leads and the busbar, respectively.

Also, in the battery module according to the present invention, each of the busbar holders may include a flat main plate having one or more slits formed therein and wing portions connected to opposite side vertical ends of the main plate.

Also, in the battery module according to the present invention, each of the wing portions may be bent so as to have a predetermined shape.

Also, in the battery module according to the present invention, the pressing layer may include a pressing pad and a reinforcement frame.

Also, in the battery module according to the present invention, the pressing pad may be provided in one surface thereof with a recess, and the reinforcement frame may be seated in the recess.

Also, in the battery module according to the present invention, the pressing pad may be located on each of the upper part and the lower part of the stacked battery cells, the recess of the pressing pad located on the upper part of the stacked battery cells may face upwards, and the recess of the pressing pad located on the lower part of the stacked battery cells may face downwards.

Also, in the battery module according to the present invention, the recess and the reinforcement frame may have identical vertical sectional shapes.

Also, in the battery module according to the present invention, each of the recess and the reinforcement frame may have a vertical sectional shape of " 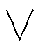 ", " 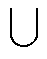 ", or " 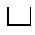 ".

Also, in the battery module according to the present invention, the pressing pad may be made of an insulation plastic material, and the reinforcement frame may be made of a metal material.

Also, in the battery module according to the present invention, the upper cover may be provided with a second perforated portion.

Also, in the battery module according to the present invention, the second perforated portion may have a rectangular slit shape.

Also, in the battery module according to the present invention, the second perforated portion may be formed in a longitudinal direction of the upper cover.

Also, in the battery module according to the present invention, the second perforated portion may be located on a vertical extension line of the third space portion.

Also, in the battery module according to the present invention, the second perforated portion may be formed in a lateral direction of the upper cover.

Also, in the battery module according to the present invention, the second perforated portion may be located on a vertical extension line of the reinforcement frame.

Also, in the battery module according to the present invention, the second perforated portion may be formed in equal number to the reinforcement frame.

Also, in the battery module according to the present invention, the second perforated portion is circular.

Also, in the battery module according to the present invention, the second perforated portion may be provided with a mesh net.

Also, in the battery module according to the present invention, the lower cover may be provided with a first perforated portion.

In addition, the present invention provides a battery pack including the battery module.

In addition, the present invention provides an energy storage system having the battery pack.

### [Advantageous Effects]

A battery module according to the present invention has an advantage in that a pair of bent plates is located at opposite side ends of a vertical plate so as to face each other, whereby it is possible to interrupt discharge of flare and spark generated at the time of thermal runaway to the outside or to interrupt movement of the flare and the spark to electrode leads, and therefore it is possible to prevent fire outbreak of the battery module.

In addition, the battery module according to the present invention has an advantage in that it is possible to rapidly discharge vent gas ejected at the time of thermal runaway to the outside, and at this time it is also possible to discharge air together with the vent gas, whereby it is possible to prevent occurrence of flame.

### [Description of Drawings]

FIG. 1 is an external perspective view of a battery module according to a first preferred embodiment of the present invention when viewed in a direction toward one side of the battery module.
FIG. 2 is an exploded perspective view of the battery module shown in FIG. 1.
FIG. 3 is an exploded perspective view of a cell stack in the battery module shown in FIG. 1.
FIG. 4 is an exploded perspective view of a pressing retention unit.
FIG. 5 is an exploded perspective view illustrating a coupling structure between a side cover and a busbar holder.
FIG. 6 is a perspective view of the battery module shown in FIG. 1 when viewed from the front in the state in which an upper cover is removed therefrom.
FIG. 7 is a plan view of the battery module shown in FIG. 1 when viewed from above in the state in which the upper cover is removed therefrom.
FIG. 8 is a sectional view of the battery module taken along line A-A' of FIG. 1.
FIG. 9 is a sectional view showing various modifications of the side cover.
FIG. 10 is a sectional view showing other modifications of the side cover.
FIG. 11 is an external perspective view of a battery module according to a second preferred embodiment of the present invention when viewed in a direction toward one side of the battery module.
FIG. 12 is an external perspective view of a battery module according to a third preferred embodiment of the present invention when viewed in a direction toward one side of the battery module.
FIG. 13 is an external perspective view of a battery module according to a fourth preferred embodiment of the present invention when viewed in a direction toward one side of the battery module.

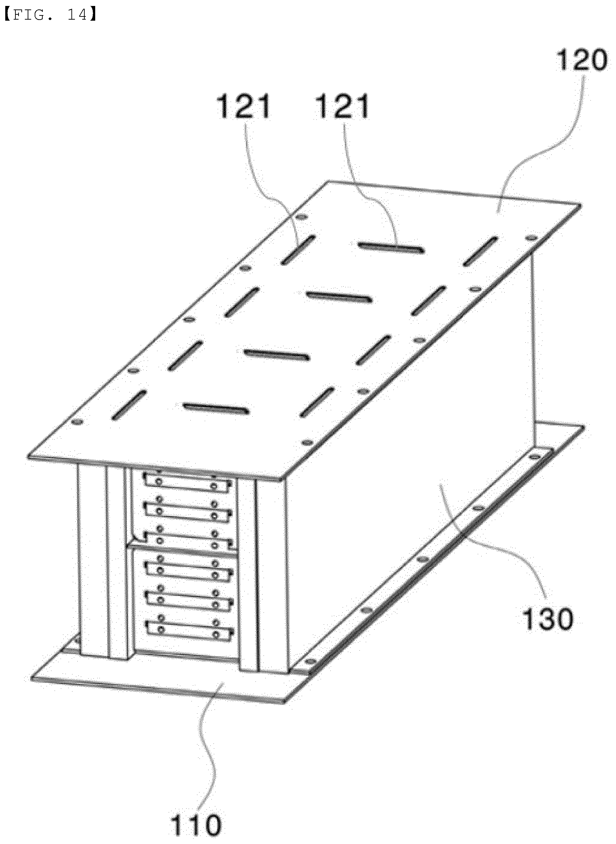

FIG. 14 is an external perspective view of a battery module according to a fifth preferred embodiment of the present invention when viewed in a direction toward one side of the battery module.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a battery module having a pocket capable of capturing flare and spark ejected at the time of swelling according to the present invention will be described with reference to the accompanying drawings.

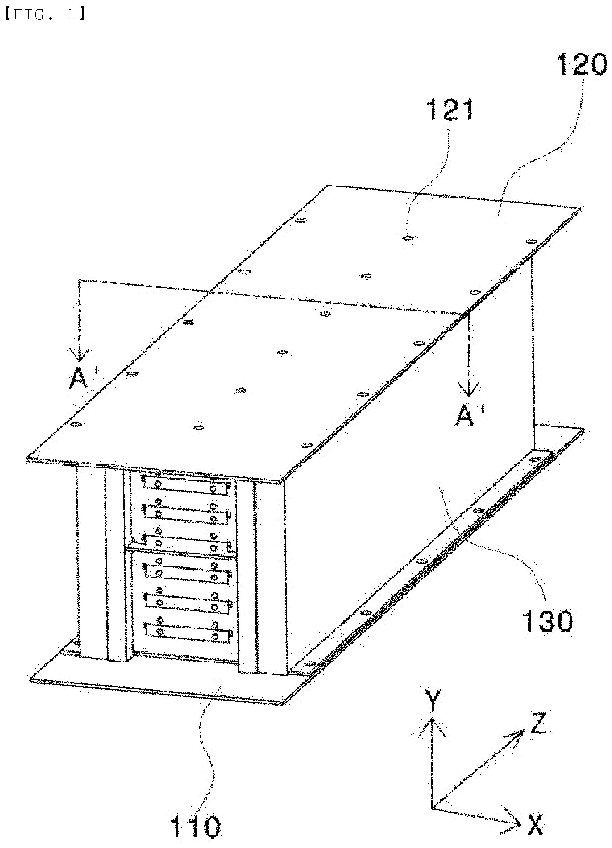

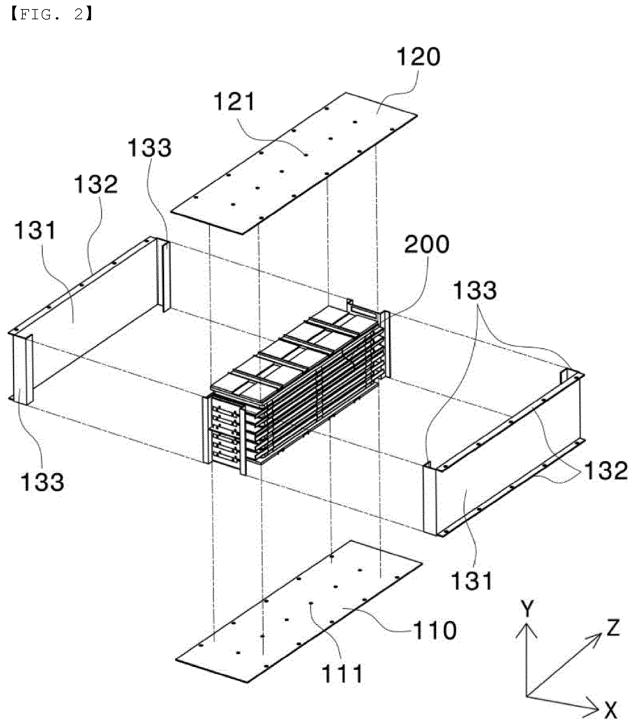

FIG. 1 is an external perspective view of a battery module according to a first preferred embodiment of the present invention when viewed in a direction toward one side of the battery module, and FIG. 2 is an exploded perspective view of the battery module shown in FIG. 1.

As shown in FIGS. 1 and 2, the battery module according to the first embodiment of the present invention has an approximately hexahedral shape, and is configured to have a structure in which a cell stack 200 is received in a space defined inside a protective case 100 made of a metal material. A detailed description of the cell stack 200 will be described below.

The protective case 100 includes a lower cover 110 located under the cell stack 200, an upper cover 120 located above the cell stack 200, and a pair of side covers 130 located at sides of the cell stack 200.

First, the upper cover 120, which is configured to protect the upper part of the cell stack 200 and which is flat, is provided in a middle portion thereof with a plurality of second perforated portions 121 formed in a longitudinal direction (Z-axis direction). When an event occurs, the second perforated portions 121 serve as a passage configured to allow heat to be discharged therethrough together with vent gas. In particular, when high-pressure vent gas is discharged, air in the protective case 100 is discharged together with the vent gas, whereby it is possible to prevent outbreak of fire.

When all conditions, such as a combustible material, oxygen, and temperature higher than the ignition point, are satisfied, fire breaks out in the battery module. Since heat is discharged to the outside together with air in the protective case 100 via the second perforated portions 121 of the upper cover 120, as described above, outbreak of fire is inhibited. Here, the shape of each of the second perforated portions 121 may be circular.

Meanwhile, it is more preferable for the lower cover 110 to also be provided with first perforated portions 111 formed in the longitudinal direction (Z-axis direction) so as to perform the same function as the second perforated portions 121.

Each of the pair of side covers 130 that face each other in a state of being spaced apart from each other by a distance slightly greater than the width (X-axis direction) of the cell stack 200 includes a vertical plate 131, a horizontal extension plate 132, and a pair of bent plates 133.

When thermal runaway occurs in a specific battery cell, flare, spark, high-pressure vent gas, and heat are ejected, and, when oxygen and a combustible material coexist therewith, fire breaks out or explosion occurs.

The side cover 110 according to the present invention prevents ejection of thermal runaway products, such as flare and spark, outside the protective case 100, and guides discharge of vent gas and heat through the second perforated portions 121 of the upper cover 120 and/or the first perforated portions 111 of the lower cover 110. Since air with which the interior of protective case 100 is filled is also discharged in this process, no flame is generated.

Specifically, the vertical plate 131 is slightly spaced apart from the cell stack 200 such that an air thermal insulation layer is formed. A lower end of the vertical plate 131 is located in close contact with the upper cover 120, and an upper end of the vertical plate 131 is located in close contact with the upper cover 120. The pair of bent plates 133 is located at opposite side ends of the vertical plate 131, i.e. in the vicinity of opposite corners of the cell stack 200. Each of the bent plates 133 is formed in an L-shape open at one side, and the bent plates face each other.

Since flare and spark are captured in a space defined by the vertical plate 131 and the bent plates 133, therefore, the flare and the spark are prevented from being discharged to the outside and movement of the flare and the spark in a direction toward electrode leads is restricted, whereby it is possible to prevent the flare and the spark from coming into direct contact with the electrode leads.

The horizontal extension plate 132, which is bent outwards from each of the upper end and the lower end of the vertical plate 131, is provided for fastening between the lower cover 110 and the upper cover 120, and may be omitted as needed. Although the lower cover 110, the upper cover 120, and the pair of side covers 130 are shown as being coupled to each other after being separately manufactured in the drawings, the lower cover 110 and the pair of side covers 130 or the upper cover 120 and the pair of side covers 130 may be integrally manufactured and then the assembly process may be performed.

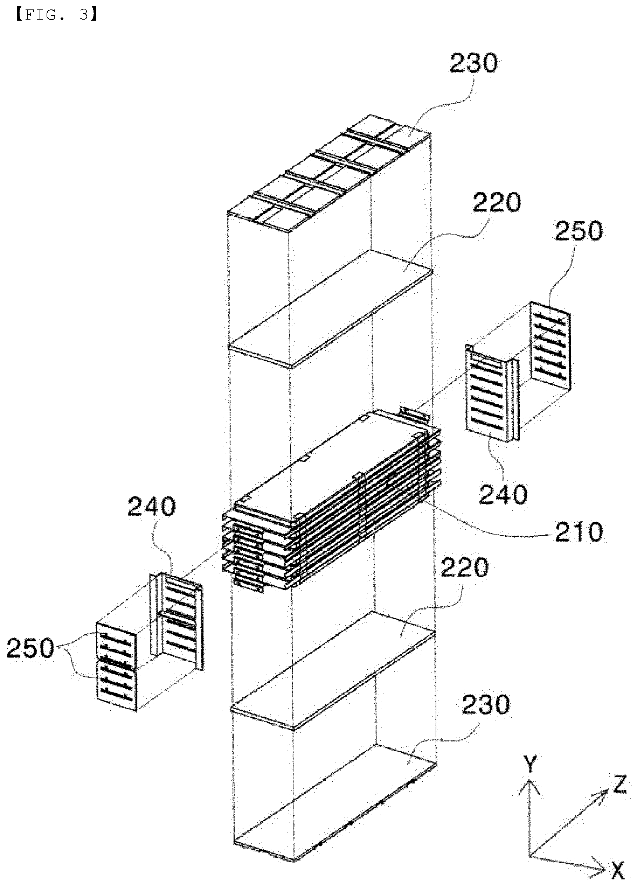

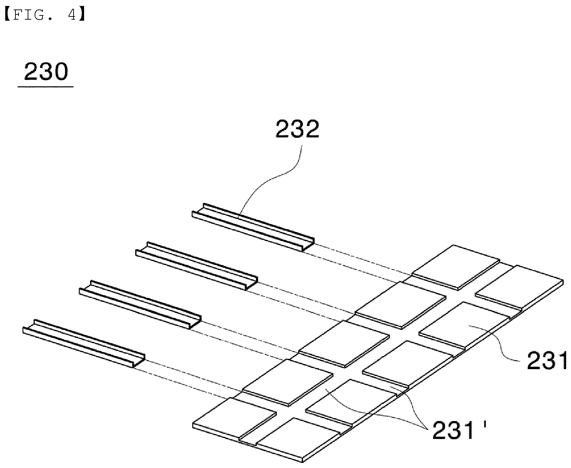

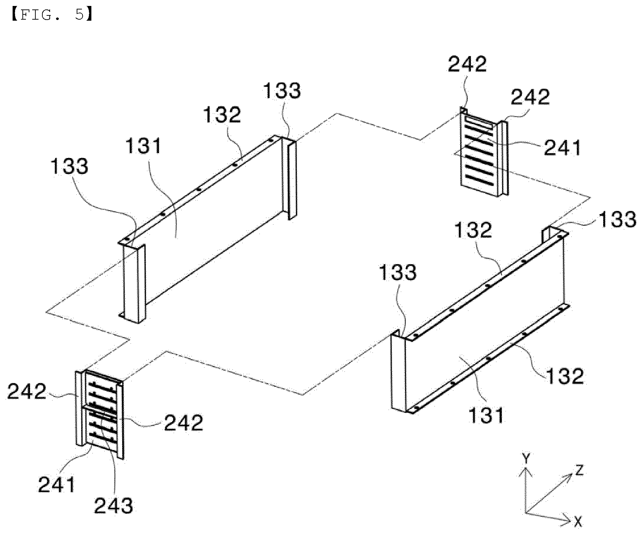

FIG. 3 is an exploded perspective view of the cell stack in the battery module shown in FIG. 1, FIG. 4 is an exploded perspective view of a pressing retention unit, and FIG. 5 is an exploded perspective view illustrating a coupling structure between a side cover and a busbar holder.

The cell stack 200 according to the present invention includes a plurality of battery cells 210 stacked in a vertical direction, one or more shock absorption pads 220, one or more pressing layers 230, a busbar holder 240, and a busbar 250.

The battery cell 210 may be a pouch-shaped battery cell, and includes a cell case configured to receive an electrode assembly (not shown) therein and a pair of electrode leads.

Here, the electrode assembly may be a jelly-roll type assembly, which is configured to have a structure in which a long sheet type positive electrode and a long sheet type negative electrode are wound in the state in which a separator is interposed therebetween, a stacked type assembly, which is configured to have a structure in which a rectangular positive electrode and a rectangular negative electrode are stacked in the state in which a separator is interposed therebetween, a stacked and folded type assembly, which is configured to have a structure in which unit cells are wound using a long separation film, or a laminated and stacked type assembly, which is configured to have a structure in which battery cells are stacked in the state in which a separator is interposed therebetween and are then attached to each other. However, the present invention is not limited thereto.

Also, it is obvious that an electrolyte may be replaced by a solid electrolyte or a gel type quasi-solid electrolyte obtained by adding an additive to a solid electrolyte, the gel type quasi-solid electrolyte having an intermediate phase between a liquid and a solid, in addition to a liquid electrolyte, which is commonly used.

The electrode assembly is received in the cell case, and the cell case is generally configured to have a laminate sheet structure including an inner layer, a metal layer, and an outer layer. The inner layer is disposed in direct contact with the electrode assembly, and therefore the inner layer must exhibit high insulation properties and high resistance to an electrolytic solution. In addition, the inner layer must exhibit high sealability in order to hermetically seal the cell case from the outside, i.e. a thermally-bonded sealed portion between inner layers must exhibit excellent thermal bonding strength. The inner layer may be made of a material selected from among a polyolefin-based resin, such as polypropylene, polyethylene, polyethylene acrylate, or polybutylene, a polyurethane resin, and a polyimide resin, which exhibit excellent chemical resistance and high sealability. However, the present invention is not limited thereto, and polypropylene, which exhibits excellent mechanical-physical properties, such as tensile strength, rigidity, surface hardness, and resistance to impact strength, and excellent chemical resistance, is the most preferably used.

The metal layer, which is disposed so as to abut the inner layer, corresponds to a barrier layer configured to prevent moisture or various kinds of gas from permeating into the battery from the outside. An aluminum thin film, which is light and easily shapeable, may be used as a preferred material for the metal layer.

The outer layer is provided on the other surface of the metal layer. The outer layer may be made of a heat-resistant polymer that exhibits excellent tensile strength, resistance to moisture permeation, and resistance to air transmission such that the outer layer exhibits high heat resistance and chemical resistance while protecting the electrode assembly. As an example, the outer layer may be made of nylon or polyethylene terephthalate. However, the present invention is not limited thereto.

Meanwhile, the pair of electrode leads is constituted by a positive electrode lead and a negative electrode lead, which may be exposed outwards from the cell case in a state of being electrically connected to a positive electrode tab and a negative electrode tab of the cell assembly, respectively, or may be directly connected to the cell assembly in the state in which the tabs are omitted.

The one or more shock absorption pads 220 may be located on one or more of the upper part and the lower part of the stacked battery cells 210, and may be interposed between the battery cells 210 as needed. The shock absorption pad 220 may be made of a material that has a volume easily changed depending on external force applied thereto, such as sponge or non-woven fabric.

The pressing layer 230, which includes a pressing pad 231 and a reinforcement frame 232, presses one or more of the upper part and the lower part of the stacked battery cells 210. In the case in which the shock absorption pad 220 is mounted, the pressing layer 230 is located outside the shock absorption pad 220 to uniformly press all surfaces of the battery cell 210. In addition, the pressing layer prevents electrical conduction between the protective case 100, which is made of a metal material, and the battery cells 210.

Here, it is preferable that the pressing pad 231 be provided in one surface thereof with a recess 231' depressed so as to have a predetermined depth and width in a lateral direction (X-axis direction), it is more preferable that the pressing pad 231 be provided in one surface thereof with a plurality of recesses formed so as to be spaced apart from each other in a longitudinal direction (Z-axis direction), and it is most preferable that the reinforcement frame 232, which is bent so as to have a predetermined shape in a state of being open at one side thereof such that the section of the reinforcement frame is an approximately "V", "U", or " 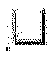 " shape and which is made of a metal material, be seated in the recess 231'.

The pressing pad 231 may be made of plastic in order to achieve light weight and insulation of the battery module. When swelling occurs, however, the pressing pad 231 melts away due to high temperature, whereby the battery cells 210 come into close contact with the inner surfaces of the lower cover 110 and the upper cover 120.

As a result, it is difficult for vent gas to move to the first perforated portions 110 of the lower cover 110 and to the second perforated portions 120 of the upper cover 120, which may impede rapid discharge of air and heat, and therefore a possibility of fire outbreak may be increased.

When the reinforcement frame 232, which is made of a metal material, is mounted, however, a space may be provided between the lower cover 110 and the battery cell 210 and between the upper cover 120 and the battery cell 210 due to the reinforcement frame 232 even though the pressing pad 231 melts away, whereby it is possible to rapidly discharge air to the outside together with vent gas.

The busbar 250, which is configured to electrically connect the leads of the battery cells 210 to each other, is a flat metal plate having slits, through which the leads extend, formed therein.

The busbar holder 240 includes a flat main plate 241 having one or more slits formed therein, wing portions 242 connected to opposite side vertical ends of the main plate 241, and an auxiliary plate 243 configured to connect the pair of wing portions 242 to each other. Here, it is preferable for each of the wing portions 242 to be bent in a predetermined shape so as to be brought into close contact with a corresponding one of the bent plates 133.

An assembly process of the battery module having the above construction will be briefly described. A cell stack 200, in which a reinforcement frame 232, a shock absorption pad 220, a plurality of battery cells 210, a shock absorption pad 220, and a reinforcement frame 232 are stacked in that order, is prepared, leads of the battery cells 210 extends through slits of a busbar holder 240 made of an insulating material.

Subsequently, the electrode leads extend through slits of a busbar 250, are bent, and are fixed using a known bonding method, such as welding.

The cell stack 200 prepared as described above is received so as to be wrapped by a lower cover 110, an upper cover 120, and a pair of side covers 130.

At this time, bent plates 133 of the side cover 130 come into close contact with wing portions 242 of the busbar holder 240, and the main plate 241 is slightly depressed in a direction toward the electrode leads. Of course, the busbar holder 240 performs the function of covering the front surface and the rear surface of the battery module.

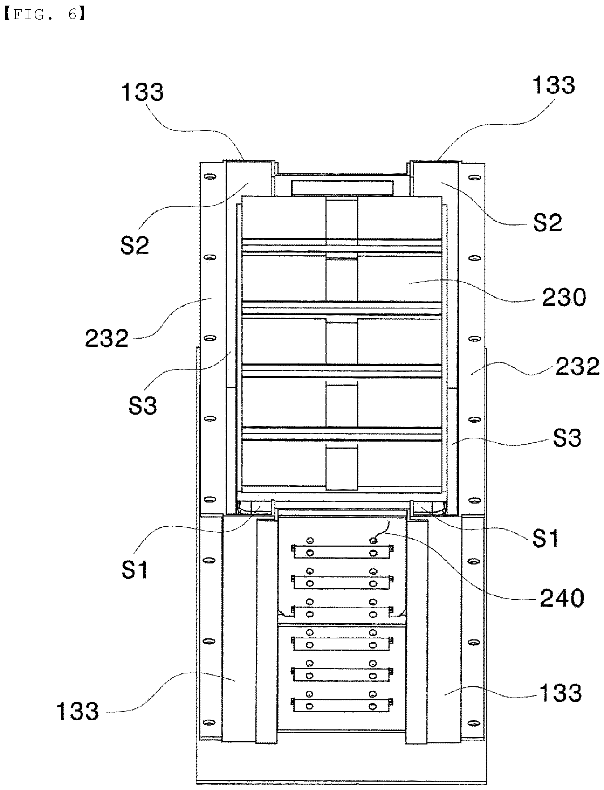

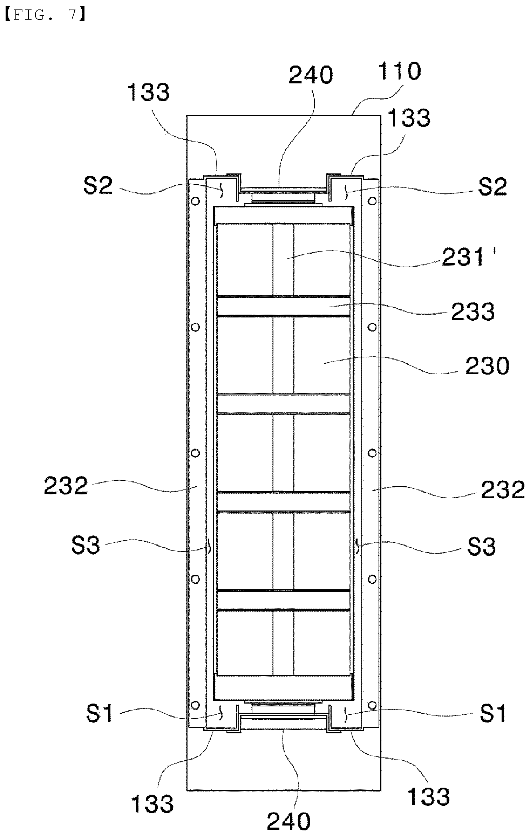

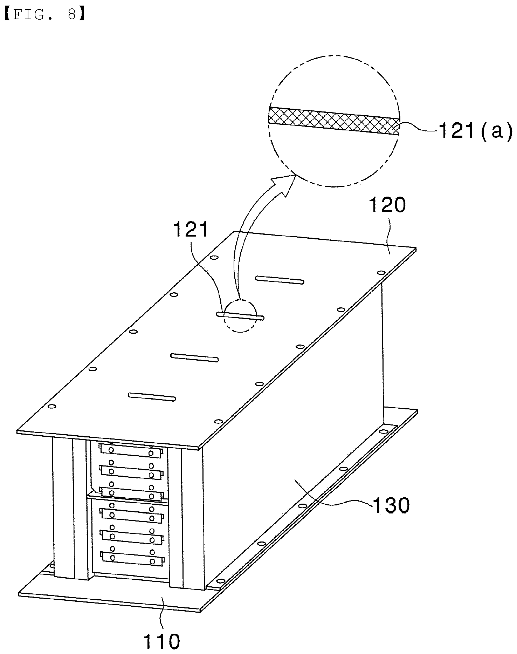

FIG. 6 is a perspective view of the battery module shown in FIG. 1 when viewed from the front in the state in which the upper cover is removed therefrom, FIG. 7 is a plan view of the battery module shown in FIG. 1 when viewed from above in the state in which the upper cover is removed therefrom, and FIG. 8 is a sectional view of the battery module taken along line A-A' of FIG. 1.

Referring to FIGS. 6 to 8, inhibition of ignition of the battery module according to the present invention will be described in detail through a description of a process in which flare, spark, vent gas, and heat move when an event, such as thermal runaway, occurs.

The battery module according to the present invention further includes a first space portion S1 to a third space portion S3 together with the bent plates 131 described above. Specifically, the first space portion S1 and the second space portion S2 are formed between the pair of bent plates 131, and the third space portion S3 is formed between the vertical side surface of the cell stack 200 in the longitudinal direction and the vertical plate 131.

For example, on the assumption that thermal runaway occurs on the right side of a specific battery cell 210 in FIGS. 6 to 8, flare or spark is gathered in one or more of the first space portion S1 to the third space portion S3 located on the right side, particularly in the first space portion S1 and the second space portion S2, in an interrupted state. Consequently, the flare or the spark cannot move not only to the front or the rear at which the busbar is located but also to the left side of the battery cell 210.

Meanwhile, since the protective case 100 and the cell stack 200 are not maintained in a perfectly airtight state, vent gas that is generated moves to the first space portion S1 located at the front and the second space portion S2 located at the rear, and is then discharged to the vicinity of the busbar holder 240.

Of course, some of the vent gas moves upwards or downwards along the vertical plate 131, moves to the space portion inside the reinforcement frame 232, and is discharged to the outside through the second perforated portions 121 of the upper cover 120 and the first perforated portions 111 of the lower cover 110. At this time, it is obvious that heat is discharged to the outside through the above path together with the vent gas.

As a result, even when an event occurs in any one battery cell, air is discharged to the outside together with vent gas, whereby oxygen necessary for ignition is deficient in the protective case, and combustible materials are captured without being discharged to the outside. Furthermore, when the air is discharged, heat is discharged together with the air, whereby the temperature of the battery cell is maintained at lower than the ignition point, and therefore it is possible to prevent outbreak of fire.

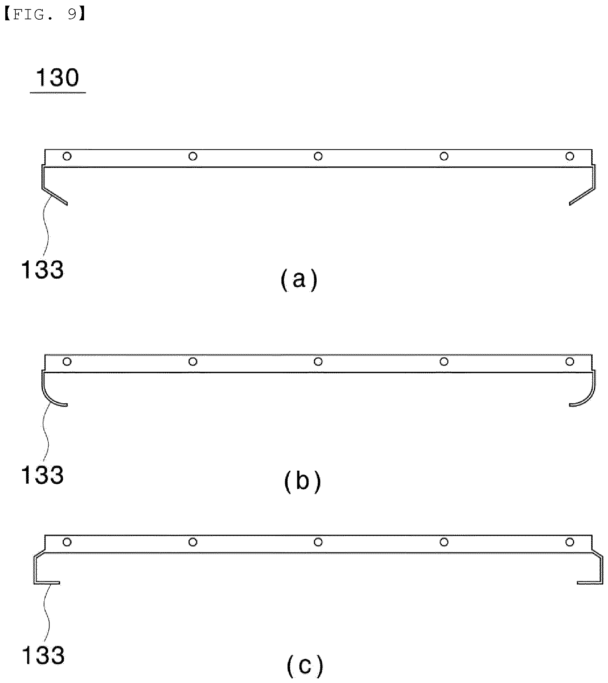

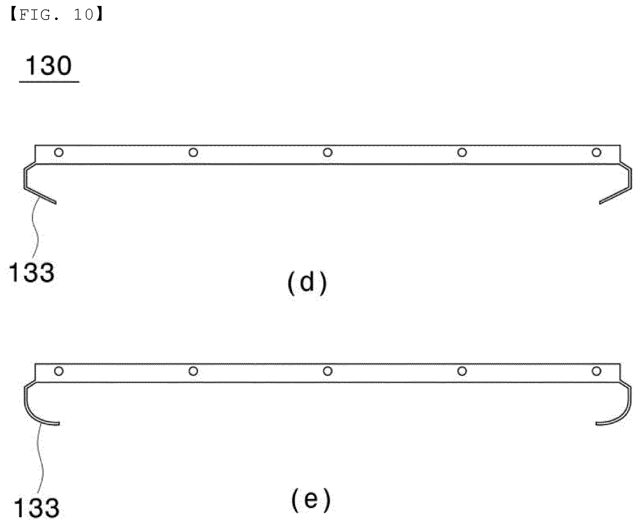

FIG. 9 is a sectional view showing various modifications of the side cover, and FIG. 10 is a sectional view showing other modifications of the side cover. As shown in FIGS. 9 and 10, the bent plate 133 of the side cover 130 may be deformed so as to capture flare and spark. That is, instead of the L-shaped section according to the first preferred embodiment, the bent plate 133 may be configured to be bent at various different angles or may include a curved portion. For example, the horizontal section of the bent plate may be deformed so as to have a shape of " 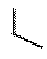 ", " 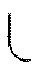 ", " 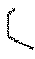 ", " 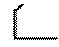 " or " 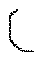 ". However, the section of the bent plate is not limited to the above shapes as long as it is possible to achieve the same object and function.

Of course, in this case, it is obvious that the busbar holder 240 may also be deformed so as to correspond to the external shape of the deformed bent plate 133.

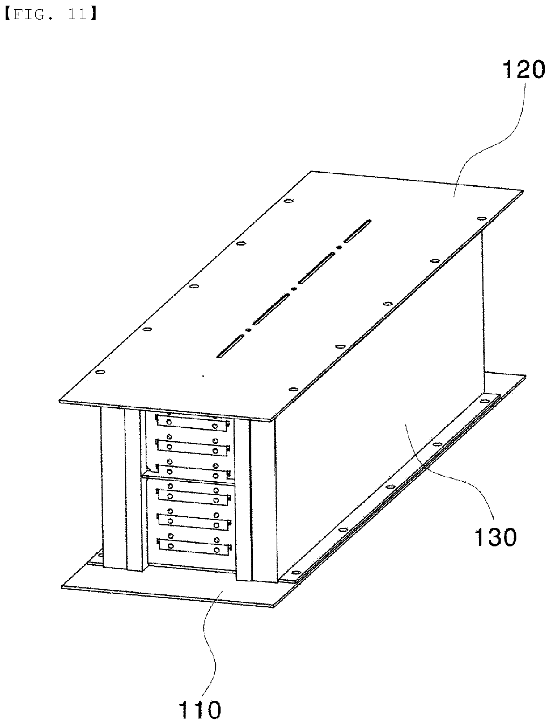

FIG. 11 is an external perspective view of a battery module according to a second preferred embodiment of the present invention when viewed in a direction toward one side of the battery module. The battery module according to the second embodiment is identical in construction to the battery module according to the first embodiment except for the external shape of the second perforated portions 121 of the upper cover 120 and the first perforated portions 111 of the lower cover 110.

The first perforated portions 111 and the second perforated portions 121 according to the second embodiment may be formed such that circular holes and rectangular slits are alternately arranged. Of course, the second perforated portions 121 of the upper cover 120 may be formed such that circular holes and rectangular slits are alternately arranged while the first perforated portions 111 of the lower cover 110 may be formed as only circular holes, and vice versa.

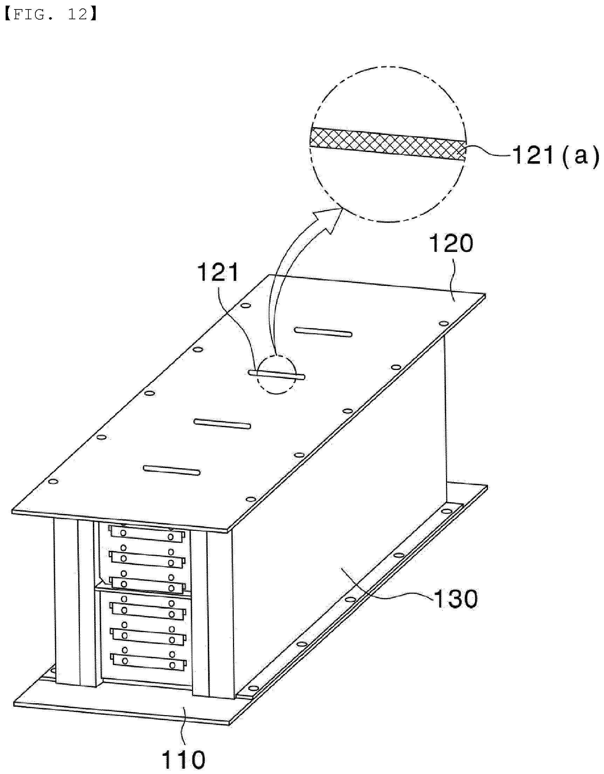

FIG. 12 is an external perspective view of a battery module according to a third preferred embodiment of the present invention when viewed in a direction toward one side of the battery module. The battery module according to the third embodiment is identical in construction to the battery module according to the first embodiment except for the external shape and position of the second perforated portions 121 of the upper cover 120 and the first perforated portions 111 of the lower cover 110.

The first perforated portions 111 and the second perforated portions 121 according to the third embodiment are formed as rectangular slits. It is preferable for the first perforated portions and the second perforated portions to be located in a lateral direction of the upper cover, specifically along vertical extension lines of the reinforcement frames 232, such that vent gas and air can be rapidly discharged to the outside, and it is more preferable for the first perforated portions and the second perforated portions to be formed in the same number as the reinforcement frames 232.

Of course, only the second perforated portions 121 of the upper cover 120 may be formed as only rectangular slits while the first perforated portions 111 of the lower cover 110 may be formed as only circular holes, and vice versa.

Meanwhile, the first perforated portions 111 and/or the second perforated portions 121 may be further provided with mesh nets. When the mesh nets 121' are mounted, it is possible to inhibit relatively large-sized thermal runaway products, such as flare and spark, from being ejected out of the upper cover 120 and/or the lower cover 110.

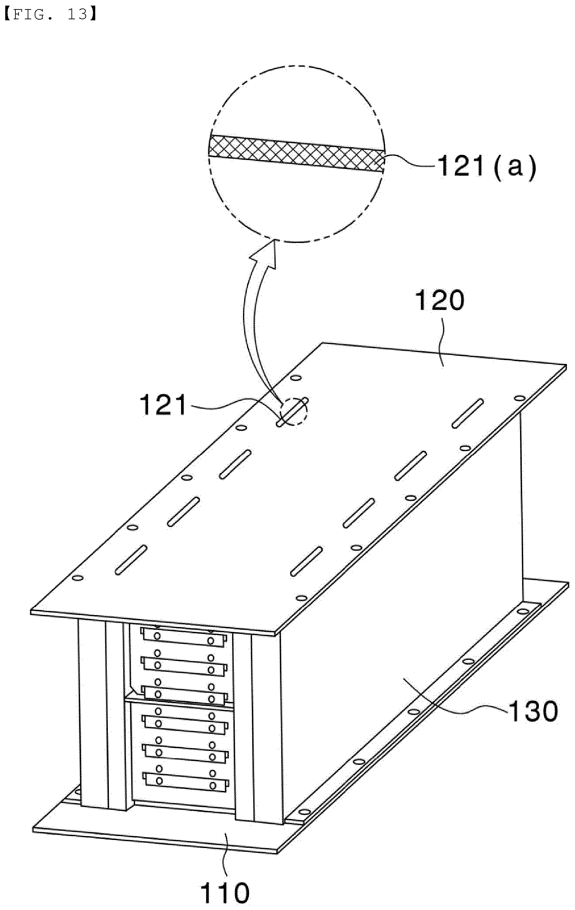

FIG. 13 is an external perspective view of a battery module according to a fourth preferred embodiment of the present invention when viewed in a direction toward one side of the battery module. The battery module according to the fourth embodiment is identical in construction to the battery module according to the third embodiment except for the external shape and position of the second perforated portions 121 of the upper cover 120.

The second perforated portions 121 according to the fourth embodiment are formed so as to have the shape of rectangular slits. In particular, it is preferable for the second perforated portions 121 to be located in plural in a longitudinal direction of the upper cover, specifically along a vertical extension line of the third space portion S3 formed as the result of the vertical plate 131 of the side cover 130 and the cell stack 200 being spaced apart from each other by a predetermined distance, such that vent gas and air can be rapidly discharged to the outside, and it is more preferable for the second perforated portions 121 to be further provided with mesh nets 121'. Although not shown in the figure, it is obvious that the first perforated portions 111 of the lower cover 110 may also be further provided with mesh nets.

FIG. 15 is an external perspective view of a battery module according to a fifth preferred embodiment of the present invention when viewed in a direction toward one side of the battery module.

The battery module according to a fifth preferred embodiment has a combination of the second perforated portions 121 of the upper cover 120 according to the third embodiment and the second perforated portions 121 according to the fourth embodiment, and the shape and position thereof are the same as above. Therefore, a description thereof will be omitted.

A plurality of battery modules, each of which has the above construction, may be disposed side by side or may be stacked in the vertical direction.

In addition, the battery module having the above construction may be received in a separate case to constitute a single battery pack, and the battery module or the battery pack may be used in various facilities or devices including large-capacity power sources, such as an energy storage system, an electric vehicle, a hybrid electric vehicle, and a plug-in hybrid electric vehicle.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and technical idea of the present invention, and it will be obvious that such changes and modifications fall within the scope of the appended claims.

### (Description of Reference Symbols)

- 100:: Protective case
- 110:: Lower cover
- 111:: First perforated portion
- 120:: Upper cover
- 121:: Second perforated portion 121': Mesh net
- 130:: Side cover
- 131:: Vertical plate 132: Horizontal extension plate
- 133:: Bent plate
- 200:: Cell stack
- 210:: Battery cell
- 220:: Shock absorption pad
- 230:: Pressing layer
- 231:: Pressing pad 231': Recess
- 232:: Reinforcement frame
- 240:: Busbar holder
- 241:: Main plate 242: Wing portion
- 243:: Auxiliary plate
- 250:: Busbar
- S1:: First space portion S2: Second space portion
- S3:: Third space portion

### [ITEMS]

[Item 1] A battery module comprising:
   a cell stack comprising a plurality of battery cells stacked in a vertical direction; and
   a protective case configured to receive the cell stack,
   wherein the protective case comprises a lower cover located under the cell stack, an upper cover located above the cell stack, and a pair of side covers located at sides of the cell stack, and
   wherein each of the side covers is provided at an inside thereof with a structure configured to interrupt movement of flare and spark ejected during swelling.
[Item 2] The battery module according to item 1, wherein each side cover comprises:
   a vertical plate having a lower end located in close contact with the lower cover and an upper end located in close contact with the upper cover; and
   a pair of bent plates formed at opposite side ends of the vertical plate so as to be bent and/or curved in a predetermined shape and face each other.
[Item 3] The battery module according to item 2, wherein the vertical plate of the side cover and the cell stack are spaced apart from each other by a predetermined distance to form a third space portion.
[Item 4] The battery module according to item 2, wherein the cell stack comprises:
   the plurality of battery cells stacked in the vertical direction;
   a pressing layer located on at least one of an upper part and a lower part of the stacked battery cells;
   a busbar configured to allow positive electrode leads and negative electrode leads of the plurality of battery cells to be connected thereto; and
   a pair of busbar holders interposed between the positive electrode leads and the busbar and between the negative electrode leads and the busbar, respectively.
[Item **5]** The battery module according to item 4, wherein each of the busbar holders comprises:
   a flat main plate having one or more slits formed therein; and
   wing portions connected to opposite side vertical ends of the main plate.
[Item **6]** The battery module according to item 5, wherein each of the wing portions is bent so as to have a predetermined shape.
[Item **7]** The battery module according to item 4, wherein the pressing layer comprises a pressing pad and a reinforcement frame.
[Item 8] The battery module according to item 7, wherein the pressing pad is provided in one surface thereof with a recess, and
   wherein the reinforcement frame is seated in the recess.
[Item 9] The battery module according to item 8, wherein the pressing pad is located on each of the upper part and the lower part of the stacked battery cells,
   wherein the recess of the pressing pad located on the upper part of the stacked battery cells faces upwards, and
   wherein the recess of the pressing pad located on the lower part of the stacked battery cells faces downwards.
[Item 10] The battery module according to item 8, wherein the recess and the reinforcement frame have identical vertical sectional shapes.
[Item 11] The battery module according to item 10, wherein each of the recess and the reinforcement frame has a vertical sectional shape of " 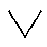 ", " 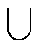 ", or " 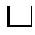 ".
[Item 12] The battery module according to item 9, wherein the pressing pad is made of an insulation plastic material, and
   wherein the reinforcement frame is made of a metal material.
[Item 13] The battery module according to item 1, wherein the upper cover is provided with a second perforated portion.
[Item 14] The battery module according to item 13, wherein the second perforated portion has a rectangular slit shape.
[Item 15] The battery module according to item 13, wherein the second perforated portion is formed in a longitudinal direction of the upper cover.
[Item 16] The battery module according to item 15, wherein the second perforated portion the second perforated portion is located on a vertical extension line of the third space portion.
[Item 17] The battery module according to item 13, wherein the second perforated portion is formed in a lateral direction of the upper cover.
[Item 18] The battery module according to item 17, wherein the second perforated portion is located on a vertical extension line of the reinforcement frame.
[Item 19] The battery module according to item 17, wherein the second perforated portion is formed in an equal number to the reinforcement frame.
[Item 20] The battery module according to item 13, wherein the second perforated portion is circular.
[Item 21] The battery module according to item 13, wherein the second perforated portion is provided with a mesh net.
[Item 22] The battery module according to item 1, wherein the lower cover is provided with a first perforated portion.
[Item 23] A battery pack comprising the battery module according to any one of items 1 to 22.
[Item 24] An energy storage system having the battery pack according to item 23.

## Claims

1. A battery module comprising:
a cell stack (200) comprising a plurality of battery cells (210) stacked in a vertical direction; and
a protective case (100) configured to receive the cell stack (200),
wherein the protective case (100) comprises a lower cover (110) located under the cell stack (200), an upper cover (120) located above the cell stack (200) and having second perforated portions (121), and a pair of side covers (130) located at sides of the cell stack (200), and
wherein each of the side covers (130) is provided at an inside thereof with a structure configured to prevent ejection of flare and spark generated during swelling to the outside of the protective case,
**characterized in that** a pressing layer (230) to uniformly press the battery cells (210) in the stacking direction is located on at least one of the upper part and the lower part of the stacked battery cells (210), wherein the pressing layer (230) comprises a pressing pad (231) and a reinforcement frame (232).

2. The battery module according to claim 1, wherein each side cover (130) comprises:
a vertical plate (131) having a lower end located in close contact with the lower cover (110) and an upper end located in close contact with the upper cover (120); and
a pair of bent plates (133) formed at opposite side ends of the vertical plate (131) so as to be bent and/or curved in a predetermined shape and face each other.

3. The battery module according to claim 2, wherein the vertical plate (131) of the side cover (130) and the cell stack (200) are spaced apart from each other by a predetermined distance to form a third space portion (S3).

4. The battery module according to claim 2, wherein the cell stack comprises:
a busbar (250) configured to allow positive electrode leads and negative electrode leads of the plurality of battery cells (210) to be connected thereto; and
a pair of busbar holders (240) interposed between the positive electrode leads and the busbar and between the negative electrode leads and the busbar (250), respectively.

5. The battery module according to claim 4, wherein each of the busbar holders (240) comprises:
a flat main plate (241) having one or more slits formed therein; and
wing portions (242) connected to opposite side vertical ends of the main plate (241).

6. The battery module according to claim 5, wherein each of the wing portions (242) is bent so as to have a predetermined shape.

7. The battery module according to claim 1, wherein the pressing pad (231) is provided in one surface thereof with a recess (231'), and
wherein the reinforcement frame (232) is seated in the recess (231').

8. The battery module according to claim 7, wherein the pressing pad (231) is located on each of the upper part and the lower part of the stacked battery cells (210),
wherein the recess (231') of the pressing pad (231) located on the upper part of the stacked battery cells (210) faces upwards, and
wherein the recess (231') of the pressing pad (231) located on the lower part of the stacked battery cells (210) faces downwards.

9. The battery module according to claim 7, wherein the recess (231') and the reinforcement frame (232) have identical vertical sectional shapes.

10. The battery module according to claim 9, wherein each of the recess (231') and the reinforcement frame (232) has a vertical sectional shape of "V", "U", or **"** 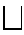 **".**

11. The battery module according to claim 8, wherein the pressing pad (231) is made of an insulation plastic material, and
wherein the reinforcement frame (232) is made of a metal material.

12. The battery module according to claim 1, wherein the second perforated portion (121) has a rectangular slit shape.

13. The battery module according to claim 1, wherein the second perforated portion (121) is formed in a longitudinal direction of the upper cover (120).

14. The battery module according to claim 13, wherein the second perforated portion (121) is located on a vertical extension line of the third space portion (S3).

15. The battery module according to claim 1, wherein the second perforated portion (121) is formed in a lateral direction of the upper cover (120).

16. The battery module according to claim 15, wherein the second perforated portion (121) is located on a vertical extension line of the reinforcement frame (232).

17. The battery module according to claim 15, wherein the second perforated portion (121) is formed in an equal number to the reinforcement frame (232).

18. The battery module according to claim 1, wherein the second perforated portion (121) is circular.

19. The battery module according to claim 1, wherein the second perforated portion (121) is provided with a mesh net (121(a)).

20. The battery module according to claim 1, wherein the lower cover (110) is provided with a first perforated portion (111).

21. A battery pack comprising the battery module according to any one of claims 1 to 20.

22. An energy storage system having the battery pack according to claim 21.
